# EUROPÄISCHE PATENTSCHRIFT

(11) **EP 0 555 647 B1**
(45) Veröffentlichungstag und Bekanntmachung des Hinweises auf die Patenterteilung: **13.12.1995**
(21) Anmeldenummer: 93100461.8
(22) Anmeldetag: 14.01.1993
(51) Int. Cl.: G01M 1/02

(54) **Verfahren und Vorrichtung zur Bestimmung der Anzahl von aufeinanderfolgenden Auswuchtvorgängen**
Procedure and device for determining the number of successive balancing operations
Procédé et dispositif pour déterminer le nombre des opérations d'équilibrage successives

(30) Priorität: 11.02.1992 DE 4203927
(43) Veröffentlichungstag der Anmeldung: 18.08.1993
(73) Patentinhaber: HOFMANN WERKSTATT-TECHNIK GMBH, D-64319 Pfungstadt (DE)
(72) Erfinder: Moench, Uwe, W-6140 Bensheim 1 (DE)
(74) Vertreter: Nöth, Heinz, Dipl.-Phys.

(56) Entgegenhaltungen:
- EP-A- 0 418 574
- DE-A- 3 531 131

## Beschreibung

Die Erfindung betrifft ein Verfahren nach dem Oberbegriff des Patentanspruches 1 und eine Vorrichtung nach dem Oberbegriff des Patentanspruches 5.

Beim Auswuchten von Rotoren auf einer Auswuchtmaschine sind für aufeinanderfolgende Rotore in aller Regel bei den jeweiligen Rotoren eine unterschiedliche Anzahl von Meßläufen erforderlich, um einen Auswuchtvorgang durchzuführen, bei dem der Rotor soweit ausgewuchtet wird, daß eine eventuell noch vorhandene Restunwucht innerhalb einer festgelegten Toleranz, beispielsweise von 3 g, liegt. Hieraus ergibt sich die Schwierigkeit, daß man die Anzahl der mit der Auswuchtmaschine tatsächlich ausgewuchteten Rotore, z.B. Kraftfahrzeugräder, unter Zugrundelegung der Meßläufe nicht zählen kann. Die unterschiedliche Anzahl von Meßläufen bei jedem Auswuchtvorgang hat verschiedene Gründe. Beispielsweise kann der auszuwuchtende Rotor relativ große Ausgangsunwuchten besitzen, die eine größere Anzahl von Meßläufen erforderlich macht, um die Unwucht des Rotors in die festgelegte Toleranz zu bringen. Auch können unterschiedliche Geschicklichkeiten und Genauigkeiten, mit denen die Ausgleichsvorgänge von verschiedenen Auswuchtleuten durchgeführt werden, zu unterschiedlicher Anzahl an Meßläufen bei verschiedenen Auswuchtvorgängen führen.

Aufgabe der Erfindung ist es, ein Verfahren und eine Vorrichtung zu schaffen, mit denen die Anzahl der tatsächlich mit der Auswuchtmaschine ausgewuchteten Räder genau gezählt werden kann.

Diese Aufgabe wird beim Verfahren erfindungsgemäß durch den Patenanspruch 1 und bei der Vorrichtung erfindungsgemäß durch die im Anspruch 5 angegebenen Merkmale gelöst.

Bei der Erfindung wird während eines jeweiligen Auswuchtvorganges, bei dem ein Rotor innerhalb einer festgelegten Toleranz ausgewuchtet wird, aus den erforderlichen Meßläufen der Meßlauf ausgewählt, bei welchem festgestellt wird, daß die gemessene Unwucht innerhalb der festgelegten Toleranz liegt. Es handelt sich hier um den sogenannten Nullauf. Durch diesen Nullauf wird jeweils ein Zählschritt für den fortlaufenden Zählvorgang veranlaßt. Auf diese Weise erreicht man eine genaue Ermittlung der Anzahl der tatsächlich ausgewuchteten Räder. Für die Durchführung einer Überwachung des Betriebs der Auswuchtmaschine ist dies von Vorteil. Zum Beispiel läßt sich das Verhältnis aller Meßläufe zu den Nulläufen angeben. Hierzu können alle Meßläufe zusätzlich zu den Nulläufen gezählt werden. Man gewinnt hieraus eine Aussage über die Funktionalität der Auswuchtmaschine. Wenn dieses Verhältnis (Anzahl der Meßläufe/Anzahl der Nulläufe) einen bestimmten Wert überschreitet, kann dies ein Hinweis sein, daß die Maschine neu justiert werden muß. Natürlich kann man auch nach einer vorgegebenen Anzahl von Meßläufen, die sich mit Hilfe eines zusätzlichen Zählvorgangs erfassen läßt, ein Hinweissignal für einen Justagevorgang erzeugen.

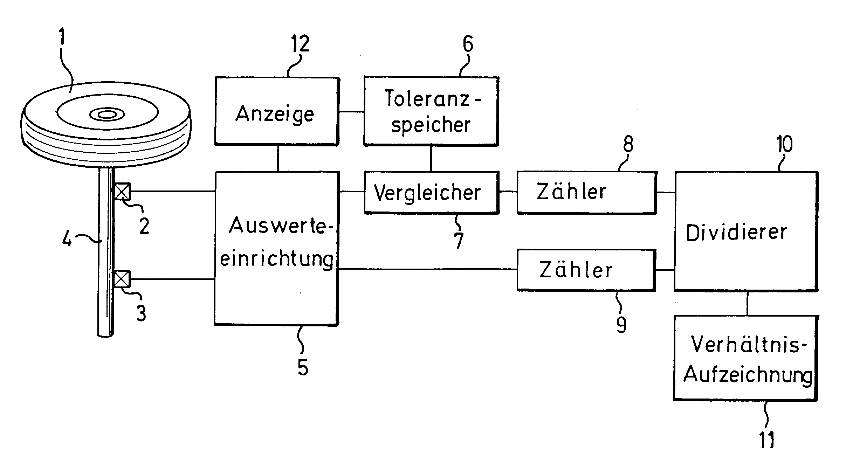

Anhand der Figur, in welcher ein Blockschaltbild für ein Ausführungsbeispiel dargestellt ist, wird die Erfindung noch näher erläutert.

Von der Auswuchtmaschine sind in der Figur nur die für das Verständnis der Erfindung wesentlichen Merkmale dargestellt. In der Auswuchtmaschine wird ein auszuwuchtender Rotor 1, beispielsweise ein Kraftfahrzeugrad, mit Hilfe bekannter Aufspannmittel auf eine Meßspindel 4 aufgespannt. Mit der Meßspindel 4 wirken Meßwandler 2 und 3 zusammen, welche von einer Rotorunwucht verursachte Kräfte messen. Die Meßwandlersignale 2 und 3 werden einer zur Unwuchtmeßeinrichtung gehörenden Auswerteeinrichtung 5 zugeleitet. Derartige Unwuchtmeßeinrichtungen und Auswerteeinrichtungen sind bekannt (Hofmann Info 2 "Meßverfahren in der Auswuchttechnik" der Firma Gebr. Hofmann GmbH & Co. KG, Pfungstadt, Impr. 96 200 220 010 199 05.88) An die Auswerteeinrichtung 5 ist eine Anzeigeeinrichtung 12 angeschlossen, mit welcher die gemessenen Unwuchtwerte angezeigt werden können.

Mit der Auswerteeinrichtung 5 ist ferner, z.B. ein Vergleicher 7 oder eine ähnliche Überprüfungseinrichtung verbunden. Außerdem ist mit dem Vergleicher 6 ein Toleranzspeicher 6 verbunden, in welchem Toleranzbereiche für noch zulässige Unwuchtwerte an auszuwuchtenden Rotoren abgespeichert sind. Wenn in einem Auswuchtvorgang nach einem oder mehreren Meßläufen in einem weiteren Meßlauf, einem sogenannten Nullauf, festgestellt wird, daß durch Ausgleichsvorgänge, welche nach den vorherigen Meßläufen am Rotor durchgeführt wurden, die Rotorunwucht ganz oder soweit beseitigt ist, daß sie innerhalb der abgespeicherten Toleranz liegt, läßt sich dies durch die Anzeigeeinrichtung 12 erkenntlich machen. Mit dieser kann auch der Toleranzspeicher 6 verbunden sein.

Für die Erfindung wird der Nullauf, d.h. der Meßlauf, bei welchem festgestellt wird, daß die Rotorunwucht innerhalb der abgespeicherten Toleranz liegt, noch dahingehend ausgenützt, daß der Zähler 8 beispielsweise durch einen hierbei erzeugten Zählimpuls zur Durchführung eines Zählschrittes aktiviert wird. Der Zähler 8 kann hierbei mit der Auswerteeinrichtung und/oder dem Vergleicher 7 verbunden sein, wie es aus dem Blockschaltbild der Figur hervorgeht. Auf diese Weise erreicht man, daß nur die Auswuchtvorgänge, welche normalerweise mehrere Meßläufe unterschiedlicher Anzahl aufweisen, und damit die Anzahl der mit der Auswuchtmaschine ausgewuchteten Rotore, beispielsweise Kraftfahrzeugräder, gezählt werden können.

Bei dem in der Figur dargestellten Ausführungsbeispiel ist ein weiterer Zähler 9 vorgesehen. Dieser Zähler 9 ist mit der Auswerteeinrichtung 5 verbunden. Es ist jedoch möglich, den Zähler 9 auch mit einer anderen Komponente, der aus den Meßwertgebern 2, 3 und der Spindel 4 sowie der Auswerteeinrichtung 5 bestehenden Meßeinrichtung zu verbinden. Der Zähler 9 zählt jeden Meßlauf, den die Auswuchtmaschine durchführt. Die beiden Zähler 8 und 9 sind an einen Dividierer 10 angeschlossen. Durch den Dividierer 10 läßt sich das Verhältnis zwischen der Gesamtzahl der durchgeführten Meßläufe, welche vom Zähler 9 erfaßt wird, zur Anzahl der Auswuchtvorgänge bzw. der ausgewuchteten Räder, welche im Zähler 8 erfaßt wird, bilden. Dieses Verhältnis gibt eine Aussage über die Funktionalität des Betriebes der jeweiligen Auswuchtmaschine. Gegebenenfalls kann aus diesem Verhältnis ein Hinweis gewonnen werden, daß ein neuer Justagevorgang durchgeführt werden muß, insbesondere wenn schon vorzeitig festgestellt wird, daß das Verhältnis von durchzuführenden Meßläufen zu gezählten Auswuchtvorgängen bzw. ausgewuchteten Rädern relativ hoch liegt, wofür man einen bestimmten Schwellenwert ansetzen kann. Andererseits ist es möglich, nach einer durch den Zähler 9 erfaßten bestimmten Anzahl an durchgeführten Meßläufen den Justagevorgang an der Auswuchtmaschine durchzuführen. Das im Dividierer 10 ermittelte Verhältnis kann beispielsweise fortlaufend durch eine Aufzeichnungseinrichtung 11 (Bildschirm, Drucker Speicher oder dergl.) in zeitlicher Aufeinanderfolge aufgezeichnet und zur Verfügung gehalten werden.

## Patentansprüche

1. Verfahren zur Bestimmung der Anzahl von aufeinanderfolgenden Auswuchtvorgängen, bei denen zum Auswuchten von Rotoren innerhalb festgelegter Toleranz jeweils Meßläufe unterschiedlicher Anzahl mit einer Auswuchtmaschine durchgeführt werden, dadurch gekennzeichnet, daß aus den mehreren Meßläufen während eines jeweiligen Auswuchtvorganges der Meßlauf, Nullauf, bei welchem die gemessene Unwucht innerhalb der festgelegten Toleranz liegt, für jeweils einen Zählschritt in einem fortlaufenden Zählvorgang verwendet wird.

2. Verfahren nach Anspruch 1, dadurch gekennzeichnet, daß ferner alle Meßläufe gezählt werden und das Verhältnis der Anzahl aller Meßläufe und der gezählten Auswuchtvorgänge beim aufeinanderfolgenden Auswuchten der Rotore fortlaufend gebildet wird.

3. Verfahren nach Anspruch 2, dadurch gekennzeichnet, daß der zeitliche Verlauf des Verhältnisses erfaßt wird.

4. Verfahren nach einem der Ansprüche 1 bis 3, dadurch gekennzeichnet, daß dann, wenn das Verhältnis einen vorgegebenen Wert über- bzw. unterschreitet oder nach einer vorher festgelegten Anzahl von durchgeführten Meßläufen ein Signal erzeugt wird.

5. Auswuchtmaschine zur Durchführung von aufeinanderfolgenden Auswuchtvorgängen an Rotoren zur Erzielung von innerhalb festgelegten Toleranzen liegenden Unwuchten mit einer Unwuchtmeßeinrichtung, in welcher eine Auswerteeinrichtung (5) zur Unwuchtermittlung mit Meßwertgebern (2,3) verbunden ist, einem Toleranzspeicher (6) für die Unwuchttoleranz bzw. Unwuchttoleranzen und einer Vergleichseinrichtung (7), welche mit dem Toleranzspeicher (6) und der Auswerteeinrichtung (5) für eine Bestimmung verbunden ist, ob der in einem Meßlauf gemessene Unwuchtwert innerhalb der Toleranz liegt oder nicht, dadurch gekennzeichnet, daß zur Durchführung eines Verfahrens nach Anspruch 1 ein Zähler (8) mit dem Toleranzspeicher (6) und der Auswerteeinrichtung (5) indirekt oder direkt verbunden ist und daß der Zähler (8) bei einem Meßlauf mit einem innerhalb der Toleranz liegenden Meßwert (Nullauf) zu einem Zählschritt aktivierbar ist.

6. Maschine nach Anspruch 5, dadurch gekennzeichnet, daß ein weiterer Zähler (9) mit der Unwuchtmeßeinrichtung (2-5) verbunden ist und durch jeden Meßlauf zu einem Zählschritt aktivierbar ist und daß an die beiden Zähler (8, 9) ein Dividierer (10) angeschlossen ist.

7. Maschine nach Anspruch 6, dadurch gekennzeichnet, daß mit dem Dividierer (10) eine Aufzeichnungseinrichtung verbunden ist, die den zeitlichen Verlauf des gebildeten Verhältnisses aufzeichnet.

## Claims

1. A method of determining the number of successive balancing operations in which measuring runs are performed in respective different numbers with a balancing machine for balancing respective rotary members within a specified tolerance characterised in that out of the plurality of measuring runs during a respective balancing operation the measuring run, the zero run, in which the measured unbalance lies within the specified tolerance, is used for a respective counting step in a continuous counting operation.

2. A method according to claim 1 characterised in that all measuring runs are also counted and the ratio of the number of all measuring runs and the counted balancing operations is continuously formed in successive balancing of the rotary members.

3. A method according to claim 2 characterised in that the variation in respect of time of the ratio is detected.

4. A method according to one of claims 1 to 3 characterised in that a signal is produced when the ratio rises above or falls below a predetermined value or after a previously established number of measuring runs have been performed.

5. A balancing machine for carrying out successive balancing operations on rotary members for producing unbalances which lie within specified tolerances comprising an unbalance measuring device in which an evaluation device (5) for ascertaining unbalance is connected to measurement value sensors (2, 3), a tolerance storage device (6) for the unbalance tolerance or tolerances and a comparison device (7) which is connected to the tolerance storage device (6) and the evaluation device (5) for determining whether the unbalance value measured in a measuring run is or is not within the tolerance, characterised in that for carrying out a method according to claim 1 a counter (8) is indirectly or directly connected to the tolerance storage device (6) and the evaluation device (5) and that the counter (8) can be activated for a counting step in the event of a measuring run with a measurement value within the tolerance (zero run).

6. A machine according to claim 5 characterised in that a further counter (9) is connected to the unbalance measuring device (2-5) and can be activated for a counting step by each measuring run, and that a divider (10) is connected to the two counters (8, 9).

7. A machine according to claim 6 characterised in that connected to the divider (10) is a recording device which records the variation in respect of time of the ratio formed.

## Revendications

1. Procédé de détermination du nombre d'opérations d'équilibrage successives, dans lesquelles sont chaque fois effectuées des passes de mesure en nombre différent pour l'équilibrage de rotors, dans les limites d'une tolérance fixée, avec une machine à équilibrer, caractérisé par le fait que, parmi des passes de mesure multiples au cours d'une opération d'équilibrage, la passe de mesure, passe zéro, pour laquelle le balourd mesuré est dans les limites de la tolérance fixée, est utilisée pour chaque fois un pas de comptage dans une opération de comptage en continu.

2. Procédé selon la revendication 1, caractérisé par le fait que, en outre, toutes les passes de mesure sont comptées et que le rapport du nombre de toutes les passes de mesure et des opérations d'équilibrage comptées, lors de l'équilibrage successif des rotors, est formé en continu.

3. Procédé selon la revendication 2, caractérisé par le fait que la variation du rapport en fonction du temps est déterminée.

4. Procédé selon l'une des revendications 1 à 3, caractérisé par le fait qu'un signal est émis, lorsque le rapport est supérieur ou inférieur à une valeur prédéfinie ou bien après l'exécution d'un nombre préalablement fixé de passes de mesure effectuées.

5. Machine à équilibrer pour l'exécution d'opérations d'équilibrage successives sur des rotors, afin d'obtenir des balourds restant dans les limites de tolérances fixées, comportant un dispositif de mesure de balourd, dans lequel un dispositif d'exploitation (5), servant à la détermination du balourd, est relié à des capteurs de mesure (2, 3), une mémoire de tolérances (6) pour la tolérance de balourd ou les tolérances de balourd, et un dispositif comparateur (7), qui est relié à la mémoire de tolérances (6) et au dispositif d'exploitation (5) afin d'établir si la valeur de balourd, mesurée au cours d'une passe de mesure, est ou non dans les limites de la tolérance, caractérisée par le fait que, pour la mise en oeuvre d'un procédé selon la revendication 1, un compteur (8) est relié, indirectement ou directement, à la mémoire de tolérances (6) et au dispositif d'exploitation (5), et que le compteur (8) peut être activé à un pas de comptage lors d'une passe de mesure, par une valeur de mesure (passe zéro) située dans les limites de la tolérance.

6. Machine selon la revendication 5, caractérisée par le fait qu'un autre compteur (9) est relié au dispositif de mesure de balourd (2 à 5) et qu'il peut être activé à un pas de comptage par chaque passe de mesure, et qu'un diviseur (10) est relié aux deux compteurs (8, 9).

7. Machine selon la revendication 6, caractérisée par le fait qu'un dispositif d'affichage est relié au diviseur (10), afin de présenter la variation dans le temps du rapport formé.
